# EUROPÄISCHE PATENTSCHRIFT

(11) **EP 1 511 680 B1**
(45) Veröffentlichungstag und Bekanntmachung des Hinweises auf die Patenterteilung: **19.12.2012**
(21) Anmeldenummer: 03738010.2
(22) Anmeldetag: 10.06.2003
(51) Int. Cl.: B65G 43/08, B65G 47/31, G05B 19/418

(54) **VORRICHTUNG ZUM FÖRDERN UND BEARBEITEN VON VEREINZELTEM STÜCKGUT**
DEVICE FOR CONVEYING AND PROCESSING SEPARATED PIECE GOODS
DISPOSITIF SERVANT A TRANSPORTER ET A TRAITER DES ARTICLES INDIVIDUELS

(30) Priorität: 10.06.2002 DE 10226673
(43) Veröffentlichungstag der Anmeldung: 09.03.2005
(73) Patentinhaber: Bizerba GmbH & Co. KG, 72336 Balingen (DE)
(72) Erfinder: GEISEL, Alfred, 78564 Wehingen (DE)
(74) Vertreter: Wössner, Gottfried
(86) Internationale Anmeldenummer: PCT/EP2003/006052
(87) Internationale Veröffentlichungsnummer: WO 2003/104115

(56) Entgegenhaltungen:
- EP-A- 0 385 245
- US-A- 4 852 717
- US-A- 5 070 995

## Beschreibung

Die Erfindung betrifft eine Vorrichtung zum Fördern und Bearbeiten von vereinzeltem Stückgut entlang einer Förderstrecke, welche von mehreren, aufeinander folgenden Fördervorrichtungen gebildet wird und entlang welcher mindestens eine Bearbeitungsstation angeordnet ist.

Solche Vorrichtungen beinhalten eine Steuervorrichtung mit einem Positionserfassungssensor für das einzelne Stückgut beim Eintritt in einen vorgegebenen Abschnitt der Förderstrecke.

In Fördersystemen für Automatisierungsaufgaben der eingangs beschriebenen Art werden Objekte oder Stückgut auf Transportbändern oder Transportrolleneinheiten bewegt. Muss das einzelne Stückgut oder Objekt auf der Förder- oder Transportstrecke bearbeitet werden, so erfolgen die einzelnen Bearbeitungsschritte in der Regel dann, wenn das Stückgut oder Objekt eine bestimmte Position entlang der Förderstrecke erreicht hat. Beispiele für die Bearbeitung sind folgende:
- Etikettierung eines Stückguts in Form eines Kartons, nachdem der Karton eine gewünschte Position erreicht hat;
- Aktivierung eines Barcode-Scanners, wenn der Code auf dem Stückgut (z.B. Paket) im Lesebereich des Scanners angelangt ist;
- Aussondern eines Stückgutes oder Paketes aus dem Paket- oder Stückgutfluss mit Hilfe eines Stößels, wenn sich das Stückgut an der Stößelposition befindet.

Mit Hilfe von Sensoren wie z.B. Lichtschranken oder mechanischen Schaltern wird erkannt, dass das Stückgut oder das jeweilige Objekt eine Position erreicht hat, bei der das System eine Aktion ausführen muss. Gibt es mehrere Positionen im Fördersystem, an denen das System Aktionen auszuführen hat, so müssen entsprechend viele Sensoren eingesetzt werden. Die Sensoren sind im Allgemeinen fest im System montiert, und je nach Situation ist es deswegen mitunter erforderlich, die Aktion zeitverzögert nach der Aktivierung des Sensors zu starten. Dies ist bei mikroprozessorgesteuerten Systemen an sich ohne größere Probleme möglich. Ändert sich jedoch die Transportgeschwindigkeit, so müssen unter Umständen alle Verzögerungszeiten ebenfalls wieder neu angepasst werden. Insgesamt macht dies Systeme, die häufiger an verschiedene Transportaufgaben angepasst werden müssen, wenig wartungsfreundlich.

Als Steuervorrichtungen werden herkömmlich speicherprogrammierbare Steuerungen eingesetzt, welche die Verwaltung der auf der Fördervorrichtung vorhandenen Stückgutobjekte ermöglicht. Die Kosten dieser Streckensteuerungsmodule sind allerdings hoch, da diese für weitaus höhere Genauigkeiten ausgelegt sind, als es für die Aufgaben in einer Fördervorrichtung notwendig ist.

Bei der Verwendung mehrerer Fördervorrichtungen müssen die Streckensteuermodule hardware- und softwaremäßig miteinander verbunden sein.

Dies ist mit erheblichem Aufwand verbunden, sollen die Fördervorrichtungen unabhängig von einander betrieben werden können. Hier lässt sich dann ein Steuermodul einer bestimmten Streckensteuerung oder einer Fördervorrichtung, die einen bestimmten Anteil der Förderstrecke bildet, zuordnen. Im Sinne der vorliegenden Erfindung werden alle Weginformationen, d.h. Signale von den Signalgebern zum Detektieren der jeweiligen Fördergeschwindigkeit einer einzelnen Fördervorrichtung, von einer speziellen Funktionseinheit, hier Positionsverwaltungseinheit genannt, ausgewertet. Die Positionsverwaltungseinheit kommuniziert mit anderen Funktionseinheiten der erfindungsgemäßen Fördervorrichtung über eine Busverbindung.

Aus der US 5,070,995 ist ein Fördersystem bekannt, welches ein Produktpositionierungs-Antriebskontrollsystem umfasst.

Aufgabe der vorliegenden Erfindung ist es, eine Vorrichtung zum Fördern und Bearbeiten von vereinzeltem Stückgut zu schaffen, die einfach an neue Transportaufgaben und/oder Bearbeitungsvorgänge anpassbar ist.

Diese Aufgabe wird bei der eingangs erwähnten Vorrichtung zum Fördern und Bearbeiten von vereinzeltem Stückgut erfindungsgemäß dadurch gelöst, dass die Vorrichtung neben einem ersten Positionserfassungssensor für das einzelne Stückgutobjekt beim Eintritt in einen vorgegebenen Abschnitt der Förderstrecke pro Fördervorrichtung jeweils eine dieser zugeordnete Antriebseinheit mit einem unabhängig antreibbaren Motor und einen diesem zugeordneten Signalgeber zum Detektieren des jeweiligen Förderwegs pro Zeiteinheit aufweist, wobei die Steuervorrichtung mit dem Positionserfassungssensor verbunden sowie mit den Antriebseinheiten und der Bearbeitungsstation über eine Busverbindung verbunden ist, wobei die Steuervorrichtung eine Einheit für die Positionsverwaltung umfasst, welche jedes einzelne Stückgutobjekt auf seinem Weg entlang der Förderstrecke, beginnend mit dem Erhalt eines Signals des ersten Positionserfassungssensors, verfolgt, und wobei die Steuervorrichtung ferner einen Ereignisgenerator und eine Steuereinheit umfasst für die Steuerung der Geschwindigkeit der einzelnen Fördervorrichtungen in Abhängigkeit des Bearbeitungszustands eines bestimmten Stückgutobjekts und/oder dessen Position entlang der Förderstrecke.

Der Ereignisgenerator ist derjenige Teil der Steuervorrichtung, der beim Eintreffen eines Stückgutobjekts über die Busverbindung ein Ereignissignal an eine Bearbeitungsstation sendet, welches die Bearbeitungsstationen veranlasst, vorgegebene Aktionen durchzuführen.

Verwendet man Fördersysteme, bei denen angenommen werden kann, dass das Stückgut bzw. die Objekte auf der Fördervorrichtung nicht rutschen, d.h. immer eine genaue Beziehung zwischen der Geschwindigkeit der jeweiligen Fördervorrichtung und dem damit transportierten Stückgut vorhanden ist, kann die Verwendung eines ersten Positionserfassungssensors für die gesamte Vorrichtung zum Fördern und Bearbeiten von Stückgut genügen. Es wird dann lediglich zu Beginn des Eintritts des Stückgutobjekts in die Fördervorrichtung das Stückgutobjekt von einem ersten Positionserfassungssensor erfasst. Anschließend kann mit Hilfe der Signalgeber der jeweiligen Fördervorrichtungen die Position des einzelnen Stückgutobjekts im Gesamtsystem durch die Steuereinheit fortwährend überwacht und verfolgt werden. Die Position des einzelnen Stückgutobjekts ist zu jeder Zeit in der gesamten Vorrichtung bekannt. D.h. die Position des einzelnen Stückgutobjektes ist stets als absolute Position bekannt und wird nicht nur als eine relative Position als Funktion der Zeit berechnet.

In Fällen, in denen Fördervorrichtungen verwendet werden und/oder Stückgut zum Einsatz kommt, bei dem die Voraussetzung nicht unbedingt gewährleistet ist, dass das Stückgut auf dem Fördersystem bzw. auf den Fördervorrichtungen nicht rutscht, ist es vorteilhaft, in der Vorrichtung einen oder mehrere weitere Positionserfassungssensoren anzuordnen, um die Position des jeweiligen Stückgutobjekts entlang der Förderstrecke bei Eintritt in bestimmte Förderabschnitte neu zu überprüfen und gegebenenfalls zu korrigieren. Auch hier ist dann die Position der Stückgutobjekte wieder absolut, da verifiziert, bekannt.

Aufgrund der Tatsache, dass bei der erfindungsgemäßen Vorrichtung wie zuvor beschrieben die Position der Stückgutobjekte überwacht und gegebenenfalls verifiziert wird, können mit der Vorrichtung unterschiedliche Verweilzeiten in den verschiedenen Abschnitten der Förderstrecke toleriert werden, beispielsweise von Stückgutobjekt zu Stückgutobjekt unterschiedliche Verweilzeiten in einer Bearbeitungsstation, ebenso wie unterschiedliche oder schwankende Transportgeschwindigkeiten.

Damit sind auch unvorhergesehen eintretende Verzögerungen oder gar das Stoppen eines von mehreren Bändern des Fördersystems, beispielsweise verursacht durch ein manuelles Eingreifen des Bedienpersonals, abzufangen und zu bewältigen, ohne dass die genauen Positionsdaten der in der Vorrichtung verweilenden Stückgutobjekte verloren gehen.

Die Erfindung nutzt die Tatsache, dass bei drehzahlgeregelten Transportantrieben meist zur Drehzahlerfassung ohnehin Wegmesseinrichtungen an den Motoren vorhanden sind, die im Sinne der vorliegenden Erfindung als Signalgeber zum Detektieren der jeweiligen Fördergeschwindigkeit verwendet werden können.

Im Falle der Verwendung von Schrittmotoren lässt sich das von der zugehörigen Schrittmotorsteuerung abgegebene Schrittimpuls-Signal und ein Drehrichtungssignal von der Steuereinheit bzw. der Positionsverwaltungseinheit auswerten.

Durch die Verringerung der Zahl an Sensoren werden weniger potentielle Störquellen im System vorhanden sein.

Als Beispiel für eine geeignete Busstruktur sei der sogenannte CAN-Bus genannt, der z.B. in der DE 41 40 017 C2 ausführlich beschrieben ist.

Bei einer bevorzugten Vorrichtung entsprechend der vorliegenden Erfindung tauscht die Steuereinheit mit den Antriebseinheiten der Antriebsmotoren für die jeweiligen Fördervorrichtungen über die Busverbindung Steuersignale zur Steuerung der individuellen Geschwindigkeit der Fördervorrichtung aus. Die Antriebseinheiten können hier quasi autark ausgebildet werden, so dass diese lediglich ein Geschwindigkeitssignal benötigen und danach selbständig die Geschwindigkeit der jeweiligen Fördervorrichtung steuern bzw. kontrollieren. Die Antriebseinheiten können bevorzugt als eine Art Bearbeitungsstation ausgebildet werden.

Weiter wird gemäß einer Variante der vorliegenden Erfindung die Vorrichtung so ausgebildet sein, dass die Positionsverwaltungseinheit eine Auswerteeinheit für die von den Signalgebern empfangenen, den Förderweg pro Zeiteinheit einer Fördervorrichtung repräsentierenden Signale aufweist, wobei die Auswerteeinheit die empfangenen Signale in Positionswerte für ein individuelles, die Vorrichtung durchlaufendes Stückgut umsetzt und in einen Positionswertdatenspeicher während des Durchlaufs des Stückgutes durch die Fördervorrichtung ablegt bzw. diesen aktualisiert.

Bei dieser Ausgestaltung der vorliegenden Erfindung kann dann direkt auf die von den Wegmesseinheiten bzw. von den Schrittmotorsteuerungen der Motoren gelieferten Signale zurückgegriffen und die Auswertung dieser Signale zentral bei der Steuervorrichtung vorgenommen werden.

Alternativ kann vorgesehen sein, dass die Signalgeber der Vorrichtungen in vorgegebenen Abständen eine Information über die Busverbindung übermitteln, wobei dann die Signalgeber mit einer jeweiligen lokalen Auswerte- und Aufbereitungseinheit ausgerüstet sind, um die aus der Drehzahlerfassung erlangten Signale in Förderweginformationen der Fördervorrichtung umzuwandeln.

Bei einer weiter bevorzugten Vorrichtung gemäß der vorliegenden Erfindung wird die Vorrichtung einen zweiten Positionserfassungssensor umfassen, welcher in einem vorgegebenen Abstand zum ersten Positionserfassungssensor entlang der Förderstrecke angeordnet ist.

Dies erlaubt, wie zuvor erwähnt, auch kritische Transportaufgaben zu lösen, bei denen nicht unbedingt vorausgesetzt werden kann, dass das Stückgut auf der jeweiligen Transportvorrichtung nicht rutscht. Diese Struktur der erfindungsgemäßen Vorrichtung erlaubt darüber hinaus die Kontrolle, ob auch jedes einzelne eingangs von dem ersten Positionserfassungssensor registrierte Stückgutobjekt über den Weg der Transportstrecke transportiert wurde und nicht unterwegs verloren gegangen ist.

Bei dieser Lösung ist dann auch die Genauigkeit, mit der der Bearbeitungsschritt an der Bearbeitungsstation eingeleitet werden kann, deutlich zu verbessern bzw. in weitaus höherem Maße zu garantieren.

Vorzugsweise sind hierbei die ersten und zweiten Positionserfassungssensoren verschiedenen Fördervorrichtungen zugeordnet, so dass der zweite Positionserfassungssensor auch den Übergabevorgang zwischen der einen und der anderen Fördervorrichtung, bei entsprechend großem Abstand gegebenenfalls auch bei mehreren Fördervorrichtungen, mit abprüfen und mit korrigieren kann.

In schwierigen Übergabesituationen, insbesondere dann, wenn die Geschwindigkeit der die Vorrichtung beliefernden externen Transportvorrichtung nicht genau bekannt ist oder kontrolliert werden kann, kann es sich empfehlen, zwei Positionserfassungssensoren an einer Fördervorrichtung anzuordnen, um nach einer ersten Erfassung des Stückgutobjekts in einem weiteren Erfassungsschritt die genaue Position dieses Stückgutobjektes zu ermitteln.

Eine besonders große Flexibilität erhält man, wenn die die Steuereinheit mit den Bearbeitungsstationen verbindende Busverbindung als eine Multimaster-Busverbindung ausgestaltet ist, da hier dann mehrere, einander ergänzende Steuereinheiten über die Busverbindung beispielsweise mit den Bearbeitungsstationen und/oder den Antriebseinheiten der Motoren - letztere gegebenenfalls als quasi Bearbeitungsstationen ausgebildet - kommunizieren können.

Bei einer weiter bevorzugten Vorrichtung ist in diese eine der Förderstrecke vorgelagerte Vereinzelungsstation für das Stückgut vorgeschaltet oder integriert.

Dies erlaubt eine optimale Anpassung des Vereinzelungsschrittes an die nachfolgende Förder- und Bearbeitungsstrecke und deren Steuermechanismen.

Vereinzelung im Sinne der vorliegenden Erfindung bedeutet, dass zwischen den einzelnen Stückgutobjekten ein ausreichender Abstand entlang der Förderstrecke vorhanden ist, der die Erkennung als separate Objekte mit dem ersten Positionserfassungssensor erlaubt.

Gemäß der vorliegenden Erfindung umfasst die Steuervorrichtung einen Ereignisgenerator, welcher in Abhängigkeit der Position eines einzelnen Stückgutes entlang der Förderstrecke ein Ereignissignal an die mindestens eine bzw. an eine der Bearbeitungstation(en) über die Busverbindung übermittelt. Dieser Ereignisgenerator kann dann beispielsweise Bearbeitungsschritte an der Bearbeitungsstation auslösen, die in Abhängigkeit von weiteren Parametern, die beispielsweise von einem früheren Bearbeitungsschritt wie etwa einem Wägeschritt herstammen, modifiziert und dem jeweiligen Stückgutobjekt angepasst sind.

So können beispielsweise als zu leicht befundene Stückgutobjekte, die einen zu geringen Füllgrad aufweisen, ausgesondert werden.

Bevorzugt wird die Positionsverwaltungseinheit modular aufgebaut, wobei jeder Fördervorrichtung ein Positionsverwaltungsmodul zugeordnet ist und wobei die Module zweier entlang der Förderstrecke aufeinander folgender Fördervorrichtungen über eine Datenschnittstelle miteinander kommunizieren. Diese Datenschnittstelle kann eine interne Schnittstelle in einer zentralen Steuervorrichtung sein, sie kann aber auch eine Datenkommunikation über die Busverbindung mit beinhalten, so dass die zentralen Module verwendet werden können.

In ähnlicher Weise kann auch der Ereignisgenerator modular aufgebaut sein, wobei dann je ein Modul einer Bearbeitungsstation zugeordnet ist.

Durch die vorbeschriebene Modulbauweise kann von einer Grundkonfiguration der Förder- und Bearbeitungsvorrichtung sehr flexibel die Vorrichtung an die jeweilige Förder- und Bearbeitungssitutation angepasst werden.

Beispielsweise können Positionsverwaltungseinheit und Ereignisgenerator mit Hilfe eines Mikrocontrollers und der dazugehörigen Software realisiert werden. Die Arbeitsweise kann wie folgt kurz zusammengefasst werden:

In der Konfigurationsphase werden die Positionen, die bestimmten Ereignissen zugeordnet werden, vorgegeben oder nach Auswertung von mehreren Konfigurationsdaten berechnet. Es werden drei Ereignislisten generiert, eine für vorderkanten-, eine für hinterkanten- und eine für mittenorientierte Ereignisse. Jede Liste ist nach aufsteigenden Positionen geordnet. Die Positionsverwaltungseinheit führt eine Liste mit allen vorhandenen Packungen (Stückgutobjekten). In dieser Liste sind unter anderem die Vorderkantenposition, die Hinterkantenposition bzw. die Packungslänge und die Position der Packungsmitte geführt.

Für alle der Positionsverwaltungseinheit bekannten Packungen wird vom Ereignisgenerator zyklisch geprüft, ob die jeweilige Bezugsposition die zum nächsten in der jeweiligen Liste stehenden Ereignis gehörige Position erreicht oder überschritten hat. Wurde die Position erreicht oder überschritten, so wird die zugehörige Ereignismeldung über den Bus verschickt.

Es ist nun alternativ vorstellbar, dass Positionsverwaltungseinheit und Ereignisgenerator von unterschiedlichen Mikrocontrollern realisiert werden (Hardware-Modularisierung). Ein Mikrocontroller macht die Positionsverwaltung, ein anderer die Ereignisgenerierung. Als Schnittstelle wäre z.B. ein Dual-Port-RAM, vorzugsweise in dem die Packungspositionen enthalten sind. Die Positionsverwaltungseinheit schreibt in dieses RAM, der Ereignisgenerator liest aus dem RAM und generiert die Ereignismeldungen. Ein Vorteil wäre eine mögliche Leistungssteigerung durch die Ausnutzung der Rechenleistung von zwei Mikrocontrollern.

Bevorzugt gibt es eine Hardware-Baugruppe, die für die Positionsverwaltung und Ereignisgenerierung für das gesamte System zuständig ist. Wie im vorigen Abschnitt beschrieben, könnte man Positionsverwaltung und Ereignisgenerierung auch auf zwei Hardware-Baugruppen verteilen.

Schließlich könnte man jeder Fördervorrichtung eine Positionsverwaltungseinheit und einen Ereignisgenerator zuordnen. Die Positionsverwaltungseinheiten müssten dann miteinander kommunizieren über eine Datenschnittstelle oder über das Bus-System.

Vorteilhaft ist es jedoch in der Regel, wenn man eine zentrale Positionsverwaltungseinheit und einen Ereignisgenerator hat, die die gesamte Förderstrecke funktional abdecken. Kommt eine neue Bearbeitungsstation hinzu, so muss man die Konfigurations-Software für den Ereignisgenerator um ein Software-Modul ergänzen. In der Konfigurationsphase stellt dieses Software-Modul die zur Erzeugung der für die Bearbeitungsstation interessierenden Ereignisse bereit. Diese werden von Ereignisgenerator in die Listen aufgenommen und während dem Stückguttransport werden die zugehörigen Meldungen über das Bus-System übertragen.

Bei einer Erweiterung um eine Bearbeitungsstation muss lediglich in der Konfigurationsphase die zur Bearbeitungsstation gehörige Konfiguration ausgeführt werden.

Die Positionsverwaltungseinheit ermöglicht eine genaue und bei Bedarf korrigierbare Verwaltung von Stückgutpositionen sowie eine stückgutbezogene Ereignisgenerierung in einer modular aufgebauten Vorrichtung zum Fördern und Bearbeiten von Stückgut, beispielsweise einem modular aufgebauten Preisauszeichnungssystem. Durch die Art der Realisierung der Vorrichtung gemäß der vorliegenden Erfindung ist die Positionsverwaltungseinheit in der Lage, die Position von Stückgut, welches über mehrere Bänder/Transportvorrichtungen transportiert wird, zentral zu erfassen und zu verwalten.

Damit lässt sich die Positionsverwaltungseinheit mit geringem Hardwareaufwand kostengünstig realisieren.

Ferner müssen an die erfindungsgemäße Vorrichtung zum Fördern und Bearbeiten von Stückgut keine über die für einen reibungslosen Stückguttransport ohnehin notwendigen Forderungen an die Art und Weise des Stückguttransportes hinausgehenden gestellt werden.

So ist es beispielsweise nicht notwendig, dass die Transportvorrichtungen mit ihren Bändern stets mit gleichen Geschwindigkeiten transportieren oder von Motoren mit gleichen Inkrementaldrehgebern angetrieben werden. Weiterhin besteht im Bedarfsfall die Möglichkeit, entlang der Förderstrecke durch geeignete weitere Positionserfassungssensoren, die als Korrektursensoren arbeiten, die jeweilige Position des einzelnen Stückgutobjekts zu korrigieren.

Realisiert man die Positionsverwaltungseinheit als sogenannten CAN-Knoten, dann besteht die Möglichkeit, das Gesamtsystem als verteiltes Steuerungssystem modular zu gestalten. Diese Möglichkeit bietet weitreichende Gestaltungsspielräume bei dem Aufbau der Förder- und Bearbeitungsvorrichtung gemäß der vorliegenden Erfindung. In Hochleistungsvorrichtungen kann für jede weitere Funktionseinheit bzw. Bearbeitungsstation eine eigene hochwertige Steuerung eingesetzt werden. In Vorrichtungen, die mehr auf das Niedrigpreissegment zielen, können einfachere Steuerungen eingesetzt werden.

Problemlos kann mit der vorliegenden Erfindung auch realisiert werden, dass die einzelnen Fördervorrichtungen mit unterschiedlichen Motor/Getriebe-Kombinationen ausgestattet werden. Beispielsweise kann ein kurzes Band, das im Verbund mit einer Wägeeinheit als Bearbeitungsstation verwendet wird, auf Grund einer Begrenzung der zulässigen Vorlast auf der Waage mit einem leichten Motor angetrieben werden, die weiteren Fördervorrichtungen werden aus Kosten- bzw. Belastungsgründen (mehrere Stückgutobjekte werden gleichzeitig auf dem Band gefördert) mit schwereren Motoren ausgerüstet.

Modular aufgebaute Preisauszeichnungssysteme bestehen in der Regel aus mehreren Funktionseinheiten bzw. Bearbeitungsstationen, die über eigene separate Steuereinheiten verfügen. Auf Grund der Notwendigkeit, eine Vielzahl von Steuerinformationen auszutauschen, wie dies in einem Preisauszeichnungssystem der Fall ist, ist der Informationsaustausch über die Busverbindung gemäß der vorliegenden Erfindung ideal. Gegenüber der Verwendung von mehreren Streckensteuerungsmodulen, die dann hardwaremäßig miteinander zu verknüpfen sind, erzielt die vorliegende Erfindung eine kostengünstigere Lösung.

Diese und weitere Vorteile der Erfindung werden im Folgenden anhand der Zeichnung noch näher erläutert. Es zeigen im Einzelnen:
- Figur 1:: eine schematische Darstellung einer Fördervorrichtung, gemäß der vorliegenden Erfindung;
- Figur 2:: eine Blockdarstellung einer erfindungsgemäßen Förder- und Bearbeitungsvorrichtung mit zugehöriger Steuervorrichtung.

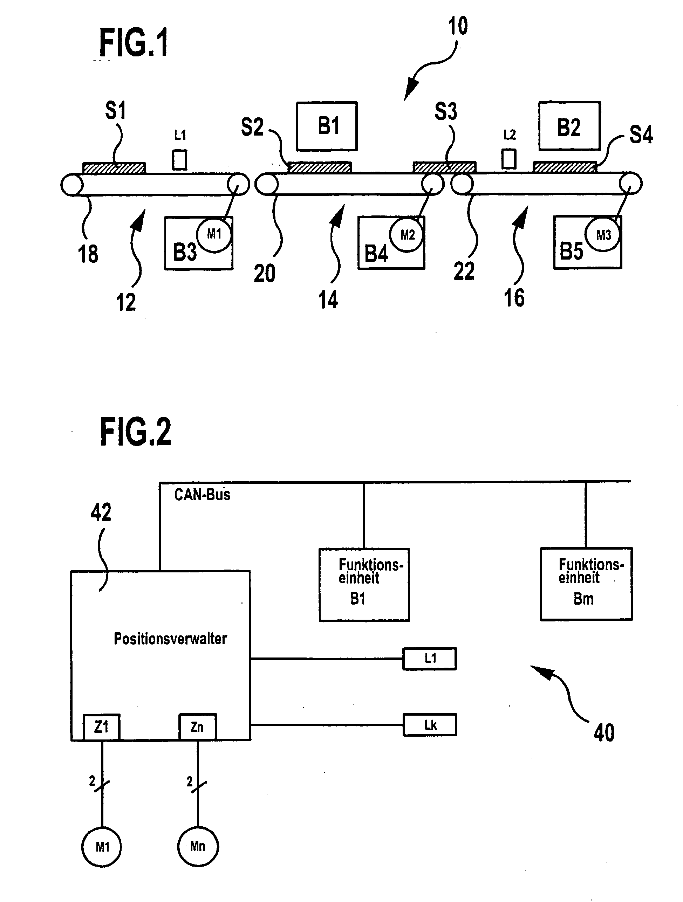

Figur 1 zeigt eine insgesamt mit dem Bezugszeichen 10 bezeichnete erfindungsgemäße Fördervorrichtung, die der Bearbeitung von vereinzeltem Stückgut entlang einer Förderstrecke dient. Bei der Vorrichtung 10 wird die Förderstrecke von drei Transportvorrichtungen, nämlich den Transportbändern 12, 14, 16, gebildet, welche je eine Antriebseinheit M1, M2 bzw. M3, die zu Bearbeitungsstationen B3, B4, B5 weitergebildet sind, und ein hiervon angetriebenes Förderband 18, 20, 22 aufweisen. In die Antriebseinheiten M1, M2, M3 ist jeweils ein Inkrementalgeber integriert.

Auf der durch die Fördervorrichtungen 12, 14, 16 gebildeten Förderstrecke werden vereinzelte Stückgutobjekte in Form der Packungen S1, S2, S3, S4 transportiert und passieren dabei zunächst einen ersten Positionserfassungssensor L1, danach eine Funktionseinheit oder Bearbeitungsstation B1, einen zweiten Positionserfassungssensor L2 und eine Bearbeitungsstationen B2. Hierbei werden die Stückgutobjekte S1, S2, S3 und S4 von Fördervorrichtung zu Fördervorrichtung übergeben, wie dies am Beispiel des Stückgutobjektes S3 in Figur 1 dargestellt ist. Die Bearbeitungsstation bzw. Funktionseinheit B1 kann beispielsweise ein Scanner sein, der einen-auf den Stückgutobjekten S1, S2, S3 und S4 angebrachten Barcode liest und die Bearbeitungsstation B2 kann beispielsweise eine Stößelvorrichtung sein, die die Stückgutobjekte, je nachdem, wie die Identifizierung durch die Bearbeitungsstation B1 ausgefallen ist, aus dem normalen Verlauf der Förderstrecke aussondert oder entlang dieser weitertransportieren lässt.

Die zu den Bearbeitungsstationen B3, B4, B5 weitergebildeten Antriebseinheiten können über eine Busverbindung von einer zentralen Steuervorrichtung angesprochen werden ebenso wie die Bearbeitungsstationen B1 und B2, beispielsweise um Daten für die Transportgeschwindigkeit zu übermitteln.

Die Figur 2 stellt eine schematische Darstellung einer allgemein gehaltenen, modular aufgebauten erfindungsgemäßen Fördervorrichtung 40 dar, einschließlich deren Steuervorrichtung und der Darstellung des Zusammenwirkens der einzelnen Bestandteile der Vorrichtung.

Ein wesentlicher Bestandteil der Steuervorrichtung ist die Positionsverwaltungseinheit 42, welche die Antriebseinheiten M1, ... Mn mit Antriebsmotoren und Inkrementalgebern der Fördervorrichtungen (vgl. Figur 1: M1, M2, M3) mit Informationen versorgt. Die Daten der Inkrementalgeber werden vorzugsweise über separate Signalleitungen an die Steuervorrichtung übermittelt, während die weitere Kommunikation mit der Steuervorrichtung bevorzugt über eine Busverbindung abgewickelt wird.

Die Positionsverwaltungseinheit 42 empfängt gleichzeitig Signale der Positionserfassungssensoren L1, ... Lk, die die Position von Stückgutobjekten entlang der Förderstrecke überwachen bzw. kontrollieren und der Positionsverwaltungseinheit 42 die Möglichkeit geben, die aktuelle mit der berechneten Position eines Stückgutobjektes in Übereinstimmung zu bringen.

Über einen sogenannten CAN-Bus ist der Positionsverwalter 42 mit Funktionseinheiten bzw. Bearbeitungsstationen B1, ... Bm verbunden und tauscht mit diesen Informationen aus.

Im Folgenden wird die Funktion einer beispielhaften erfindungsgemäßen Vorrichtung zum Fördern und Bearbeiten von vereinzeltem Stückgut im Einzelnen anhand einer Preisauszeichnungsvorrichtung beschrieben.

Zunächst wird die Steuervorrichtung mit der Positionsverwaltungseinheit 42 von einer oder mehreren Funktionseinheit(en) B1, ... Bm über das sogenannte CAN-Bus-System oder -Netzwerk konfiguriert. Während dem Konfigurationsvorgang werden der Positionverwaltungseinheit 42 Positionen vorgegeben, an die er eine mit der Position entlang der Förderstrecke verknüpfte CAN-Nachricht verschicken soll. Die Positionsverwaltungseinheit 42 verschickt dann die spezifizierte CAN-Nachricht, wenn ein transportiertes Stückgutobjekt eine während des Konfigurationsvorganges mitgeteilte oder nach Übermittlung der Konfigurationsdaten errechnete Position entlang der Förderstrecke erreicht hat. Die CAN-Nachricht kann von allen im Netzwerk angeschlossenen Funktionseinheiten bzw. Bearbeitungsstationen ausgewertet werden.

Bei der Konfiguration wird der Positionsverwaltungseinheit 42 mitgeteilt, welche Bezugskante des transportierten Stückgutobjektes für die Nachricht zu verwenden ist. Eine Nachricht kann beispielsweise verschickt werden, wenn die Vorderkante, die Hinterkante oder die Packungsmitte des Stückgutobjektes an der entsprechenden Position vorbeikommt. Die Position wird hierbei von einem Positionserfassungssensor markiert.

Eine konkrete Realisierung der Positionsverwaltungseinheit 42 besteht beispielsweise aus einer Mikrocontrollerplatine, die über eine sogenannte CAN-Schnittstelle verfügt. Die Signale der Inkrementalgeber der Antriebseinheiten M1, ... Mn werden durch geeignete Zählermodule Z1, ... Zn auf der Mikrocontrollerplatine oder auf einer zusätzlichen Platine erfasst.

Die Zählermodule Z1, ... Zn sind beispielsweise über ein internes Bus-System des Mikrocontrollers mit diesem verbunden. Die Zählermodule Z1, ... Zn lassen sich mit Hilfe von programmierbaren Logikbausteinen einfach und kostengünstig realisieren.

Vorstellbar ist auch, dass die Signale der Inkrementalgeber aufbereitet über den CAN-Bus zur Verfügung gestellt werden. Die Zählermodule Z1, ... Zn können dabei auch in die Antriebseinheiten M1, ... Mn integriert sein.

Weiterhin muss die Mikrocontrollerplatine so ausgebildet sein, dass sie die Signale der Positionserfassungssensoren L1, ... Lk einlesen bzw. auswerten kann. Diese Sensoren können z.B. Lichtschranken, mechanische Abtaster, etc. sein.

Bei Betriebsbeginn wird der Mikrocontroller die Zählermodule Z1, ... Zn so konfigurieren, dass diese die zyklisch gelesenen Zählerregisterwerte in der gewünschten Wegauflösung bzw. Auflösung von Inkrementen der Förderstrecke enthalten. Hierzu wird ein Teilerregister des Zählermoduls mit einem entsprechenden Wert geladen. Für jeden Inkrementalgeber steht ein eigenes Zählermodul zur Verfügung, so dass die Anpassung individuell durchgeführt werden kann.

Die Zählerregister werden vom Mikrocontroller zyklisch gelesen. Je größer die Lesefrequenz ist, desto genauer kann die Positionserfassung sein.

Über den Sensor L1 zu Beginn des Erfassungsbereiches der Förderstrecke werden die Packungskanten des Stückgutobjekts erfasst. Sobald eine Packungsvorderkante eines Stückgutes erfasst worden ist, summiert der Mikrocontroller zyklisch die vom Zählermodul des Bandes, an dem der Sensor L1 angebracht ist, gelieferten Weginkremente. Die Summe der Weginkremente (positiv oder negativ, je nach Transportrichtung) ergibt die jeweilige Vorderkantenposition eines Stückgutobjektes. Wird die Hinterkante vom Sensor L1 auch erfasst, so kann die Länge der Packung des Stückgutobjektes ermittelt werden.

Wenn nun eine Packung S1, ... Sx von einem Band auf das nächste übergeht, muss der Mikrocontroller ab einem bestimmten Punkt die Weginkremente des nachfolgenden Bandes zur Positionserfassung verwenden. Damit der Packungstransport funktioniert, muss beim Bandübergang bzw. bei der Übergabe eines Stückgutobjektes von der einen Fördervorrichtung auf die nächste die Geschwindigkeit des zuführenden Bandes mit dem des übernehmenden Bandes übereinstimmen. Dies vermeidet Positionsungenauigkeiten durch Schlupf oder Rutschen von Band gegenüber der Packung des Stückgutobjektes.

Wenn beim Bandübergang die beiden Geschwindigkeiten tatsächlich übereinstimmen, kann direkt beim Übergang der Vorderkante auf das nächste Band der Controller die Weginkremente des nächsten Bandes aufsummieren.

Wenn man erst dann die Inkremente des nachfolgenden Bandes verwendet, wenn die Packung bereits zur Hälfte auf dem Nachfolgeband liegt, erhält man für die Praxis mehr Sicherheit. Das folgende Beispiel soll dies erläutern:

Wenn eine auf dem Band der Fördervorrichtung 12 gestoppte Packung beschleunigt wird, so dass sie gerade beim Übergang auf das nächste Band der Vorrichtung 14 dessen Geschwindigkeit erreicht hat, so wird die Packung mit der Geschwindigkeit von Band 12 transportiert. Sind die Geschwindigkeiten beim Bandübergang leicht unterschiedlich, so ist es besser, wenn man zunächst noch annimmt, dass die Packung weiterhin mit der Geschwindigkeit von Band 12 transportiert wird, da die Packung zum überwiegenden Teil auf Band 12 liegt. Wenn die Packung zur Hälfte auf Band 14 liegt, ist zu erwarten, dass die beiden Bandgeschwindigkeiten eher übereinstimmen als am Ende der Beschleunigungsphase von Band 12.

Beim Beschleunigen und Abbremsen der Bänder können Packungen unter Umständen rutschen. Auch bei der Bearbeitung kann es unter Umständen zu einem Schlupf kommen, so dass die errechnete Packungsposition nicht mehr genau mit der tatsächlichen übereinstimmt. Um solche Fälle korrigieren zu können, besteht die Möglichkeit, Korrektursensoren L2, ... Lk auszuwerten und die von der Positionsverwaltungseinheit 42 für das jeweilige Stückgutobjekt notierte Position daraufhin zu korrigieren.

## Patentansprüche

1. Vorrichtung zum Fördern und Bearbeiten von vereinzeltem Stückgut (S1,S2,S3) entlang einer Förderstrecke welche von einer oder mehreren aufeinander folgenden Fördervorrichtungen (12,14,16) gebildet wird und entlang welcher mindestens eine Bearbeitungsstation (B1) angeordnet ist,
mit einer Steuervorrichtung und
mit einem ersten Positionsertassungssensor (L1) für ein einzelnes Stückgutobjekt beim Eintritt in einen vorgegebenen Abschnitt der Förderstrecke,
wobei pro Fördervorrichtung jeweils eine dieser zugeordnete Antriebseinheit (M1,M2,M3) mit einem unabhängig antreibbaren Motor und einem diesem zugeordneten Signalgeber zum Detektieren des jeweiligen Förderweges pro Zeiteinheit vorgesehen ist,
wobei die Steuervorrichtung mit dem Positionserfassungssensor (L1) über eine Signalleitung sowie mit den Antriebseinheiten und der/den Bearbeitungsstation(en) über eine Busverbindung verbunden ist,
und wobei die Steuervorrichtung eine Einheit für die Positionsverwaltung,
welche jedes einzelne Stückgutobjekt auf seinem Weg entlang der Förderstrecke, beginnend mit dem Erhalt eines Signals des ersten Positionserfassungssensors, verfolgt, einen Ereignisgenerator, welcher in Abhängigkeit der Position eines einzelnen Stückgutobjekts entlang der Förderstrecke über die Busverbindung ein Ereignissignal an die mindestens eine Bearbeitungsstation übermittelt, und eine Steuereinheit umfasst, welche der Steuerung der Geschwindigkeit der einzelnen Fördervorrichtungen in Abhängigkeit des Bearbeitungszustands eines bestimmten Stückgutobjekts und/oder dessen Position entlang der Förderstrecke dient.

2. Vorrichtung nach Anspruch 1, **dadurch gekennzeichnet, dass** die Steuereinheit den Antriebseinheiten Steuersignale zur Steuerung der individuellen Geschwindigkeit der Fördervorrichtungen übermittelt.

3. Vorrichtung nach Anspruch 1 oder 2, **dadurch gekennzeichnet, dass** die Positionsverwaltungseinheit eine Auswerteeinheit für die von den Signalgebern empfangenen, den Förderweg pro Zeiteinheit einer Fördervorrichtung repräsentierenden Signale aufweist, wobei die Auswerteeinheit die empfangenen Signale in Positionswerte für ein individuelles, die Vorrichtung durchlaufendes Stückgut umsetzt und in einem Positionswertdatenspeicher während des Durchlaufs des Stückgutes durch die Vorrichtung ablegt bzw. aktualisiert.

4. Vorrichtung nach Anspruch 3, **dadurch gekennzeichnet, dass** die Positionsverwaltungseinheit die Auswerteeinheiten in vorgegebenen Zeitabständen nach Förderweginformationen der Fördervorrichtungen zyklisch abfragt.

5. Vorrichtung nach einem der Ansprüche 1 bis 4, **dadurch gekennzeichnet, dass** die Vorrichtung einen zweiten Positionserfassungssensor umfasst, welcher in einem vorgegebenen Abstand zum ersten Positionserfassungssensor entlang der Förderstrecke angeordnet ist.

6. Vorrichtung nach Anspruch 5, **dadurch gekennzeichnet, dass** die ersten und zweiten Positionserfassungssensoren verschiedenen Fördervorrichtungen zugeordnet sind.

7. Vorrichtung nach einem der voranstehenden Ansprüche, **dadurch gekennzeichnet, dass** die die Steuervorrichtung mit den Bearbeitungsstationen verbindende Busverbindung eine Multimaster-Busverbindung ist.

8. Vorrichtung nach einem der voranstehenden Ansprüche, **dadurch gekennzeichnet, dass** die Steuervorrichtung mit den Bearbeitungsstationen verbindende Busverbindung als CAN-Bus ausgebildet ist.

9. Vorrichtung nach Anspruch 8, **dadurch gekennzeichnet, dass** die Positionsverwaltungseinheit als CAN-Knoten ausgebildet ist.

10. Vorrichtung nach einem der voranstehenden Ansprüche, **dadurch gekennzeichnet, dass** die Vorrichtung eine der Förderstrecke vorgelagerte Vereinzelungsstation für das Stückgut umfasst.

11. Vorrichtung nach einem der voranstehenden Ansprüche, **dadurch gekennzeichnet, dass** die Positionsverwaltungseinheit modular aufgebaut ist, wobei jeder Fördervorrichtung ein Positionsverwaltungsmodul zugeordnet ist, und wobei die Module zweier entlang der Förderstrecke aufeinander folgender Fördervorrichtungen über eine Datenschnittstelle miteinander kommunizieren.

12. Vorrichtung nach einem der Ansprüche 1 bis 11, **dadurch gekennzeichnet, dass** der Ereignisgenerator modular aufgebaut ist, wobei ein Modul einer Bearbeitungsstation oder einem Typ von Bearbeitungsstationen zugeordnet ist.

13. Verfahren zum Fördern und Bearbeiten von vereinzeltem Stückgut entlang einer Förderstrecke mit Hilfe einer oder mehrerer aufeinander folgender Fördervorrichtungen und mindestens einer Bearbeitungsstation, wobei eine mit einem ersten Positionserfassungssensor und mit Antriebseinheiten der Fördervorrichtungen verbundene Steuervorrichtung verwendet wird, welche eine Positionsverwaltungseinheit umfasst, wobei jedes einzelne Stückgutobjekt ab dem Zeitpunkt seiner Erfassung durch den ersten Positionserfassungssensor von der Positionsverwaltungseinheit bis zum Verlassen der Förderstrecke auf seinem Weg entlang derselben verfolgt wird, wobei die Positionsverwaltungseinheit von den Antriebseinheiten der Fördervorrichtungen Daten zur Ermittlung der jeweiligen Förderweg pro Zeiteinheit erhält und diese entsprechend der jeweiligen Position des Stückgutobjekts entlang der Förderstrecke bei der Aktualisierung der Positionsdaten berücksichtigt, und wobei die Steuerungsvorrichtung gegebenenfalls über einen Ereignisgenerator Steuerdaten über eine Busverbindung an die Bearbeitungsstation(en) übermittelt.

14. Verfahren nach Anspruch 13, **dadurch gekennzeichnet, dass** über den Positionserfassungssensor auch die Hinterkante eines Stückgutobjekts erfasst wird und damit die Ausdehnung des Stückgutobjekts in Förderrichtung berechnet wird.

15. Verfahren nach Anspruch 14, **dadurch gekennzeichnet, dass** die Förderwegdaten einer ersten Fördervorrichtung zum Aktualisieren der Positionsdaten eines Stückgutobjekts solange verwendet werden bis das Stückgutobjekt im Wesentlichen zur Hälfte seiner Ausdehnung in Förderrichtung auf eine nachfolgende Fördervorrichtung übergeben ist, worauf dann die Förderwegdaten der nachfolgenden Fördervorrichtung zur Aktualisierung der Positionsdaten des Stückgutobjekts verwendet werden.

16. Verfahren nach einem der Ansprüche 13 bis 15, **dadurch gekennzeichnet, dass** ein zweiter Positionserfassungssensor verwendet wird, um stromab der Förderstrecke die Positionsdaten eines Stückgutobjekts zu verifizieren und gegebenenfalls zu korrigieren.

17. Verfahren nach einer der Ansprüche 13 bis 16, **dadurch gekennzeichnet, dass** die Busverbindung als CAN-Bus ausgebildet ist.

18. Verfahren nach Anspruch 17, **dadurch gekennzeichnet, dass** die Positionsverwaltungseinheit als CAN-Knoten ausgebildet ist.

## Claims

1. Device for transporting and processing separate piece goods (S1, S2, S3) along a transport section, which is formed by one or more consecutive transport devices (12, 14, 16) and along which at least one processing station (B1), is arranged,
with a control device and
with a first position finding sensor (L1) for an individual item of the piece goods upon entry into a predetermined portion of the transport section, wherein for each transport device there is provided a respective drive unit (M1, M2, M3) associated therewith with an independently drivable motor and a signal transmitter associated therewith for detecting the respective transport distance per unit time,
wherein the control device is connected to the position finding sensor (L1) by means of a signal line and is also connected to the drive units and the processing station(s) by means of a bus connection,
and wherein the control device comprises a unit for position management, which tracks each individual item of the piece goods on its path along the transport section, beginning with the receipt of a signal of the first position finding sensor, an event generator, which transmits an event signal to the at least one processing station by means of the bus connection in dependence on the position of an individual item of the piece goods along the transport section, and a control unit, which serves to control the speed of the individual transport devices in dependence on the processing state of a specific item of the piece goods and/or its position along the transport section.

2. Device according to claim 1, **characterised in that** the control unit transmits control signals to the drive units to control the individual speed of the transport devices.

3. Device according to claim 1 or 2, **characterised in that** the position management unit has an evaluation unit for the signals received from the signal transmitters representing the transport distance per unit time of a transport device, wherein the evaluation unit converts the received signals into position values for an individual item of the piece goods passing through the device and stores or updates these in a position value data memory during passage of the piece goods through the device.

4. Device according to claim 3, **characterised in that** the position management unit cyclically interrogates the evaluation units for transport distance information of the transport devices at predetermined time intervals.

5. Device according to one of claims 1 to 4, **characterised in that** the device comprises a second position finding sensor, which is arranged along the transport section at a predetermined distance from the first position finding sensor.

6. Device according to claim 5, **characterised in that** the first and second position finding sensors are associated with different transport devices.

7. Device according to one of the preceding claims, **characterised in that** the bus connection connecting the control device with the processing stations is a multimaster bus connection.

8. Device according to one of the preceding claims, **characterised in that** the bus connection connecting the control device with the processing stations is configured as a CAN bus.

9. Device according to claim 8, **characterised in that** the position management unit is configured as a CAN node.

10. Device according to one of the preceding claims, **characterised in that** the device comprises a separation station for the piece goods installed upstream of the transport section.

11. Device according to one of the preceding claims, **characterised in that** the position management unit is modular in configuration, wherein each transport device has an associated position management module, and wherein the modules of two consecutive transport devices along the transport section communicate with one another by means of a data interface.

12. Device according to one of claims 1 to 11, **characterised in that** the event generator is modular in configuration, wherein a module is associated with a processing station or a type of processing station.

13. Method for transporting and processing separate piece goods along a transport section by means of one or more consecutive transport devices and at least one processing station, wherein a control device is used, which is connected to a first position finding sensor and to drive units of the transport devices and which comprises a position management unit, wherein each individual item of the piece goods is tracked by the position management unit from the time it is detected by the first position finding sensor until it leaves the transport section on its path along this, wherein the position management unit receives data from the drive units of the transport devices to determine the respective transport distance per unit time and takes these data into consideration in accordance with the respective position of the item of the piece goods along the transport section when updating the position data, and wherein optionally by means of an event generator the control device transmits control data by means of a bus connection to the processing station(s).

14. Method according to claim 13, **characterised in that** the rear edge of an item of the piece goods is also detected by means of the position finding sensor and the extent of the item of the piece goods in the transport direction is thus calculated.

15. Method according to claim 14, **characterised in that** the transport distance data of a first transport device are used for updating the position data of an item of the piece goods until the item of the piece goods is transferred substantially to half its extent in the transport direction onto a following transport device, whereupon the transport distance data of the following transport device are then used for updating the position data of the item of the piece goods.

16. Method according to one of claims 13 to 15, **characterised in that** a second position finding sensor is used to verify the position data of an item of the piece goods downstream of the transport section and correct these, if necessary.

17. Method according to one of claims 13 to 16, **characterised in that** the bus connection is configured as a CAN bus.

18. Method according to claim 17, **characterised in that** the position management unit is configured as a CAN node.

## Revendications

1. Dispositif pour le transport et le traitement de marchandises de détail individuelles (S1, S2, S3) le long d'une section de transport formée d'un ou plusieurs dispositifs de transport (12, 14, 16) qui se succèdent et le long de laquelle est disposée au moins une station de traitement (B1),
avec un dispositif de commande et
un premier détecteur de position (21) d'un objet marchandise de détail individuel à l'arrivée dans un secteur prédéfini de la section de transport, chaque dispositif de transport comportant une unité d'entraînement (M1, M2, M3) qui lui est affectée, avec un moteur pouvant être entraîné indépendamment et un transmetteur de signaux affecté à celui-ci pour détecter l'itinéraire de transport respectif par unité de temps,
dans lequel le dispositif de commande est relié au détecteur de position (L1) par un câble de signalisation ainsi qu'aux unités d'entraînement et à la/aux station(s) de traitement via une liaison bus,
et dans lequel le dispositif de commande comprend une unité pour la gestion des positions qui suit chaque marchandise de détail individuel sur son trajet le long de l'itinéraire de transport, en commençant par la réception d'un signal du premier détecteur de position, un générateur d'évènements qui transmet, par la liaison bus, un signal d'évènement à au moins une station de traitement en fonction de la position d'un objet marchandise de détail individuel le long de la section de transport, et une unité de commande qui sert à commander la vitesse des différents dispositifs de transport en fonction de l'état de traitement d'un objet marchandise de détail donné et/ou de sa position le long de la section de transport.

2. Dispositif selon la revendication 1, **caractérisé en ce que** l'unité de commande transmet aux unités d'entraînement des signaux de commande pour commander la vitesse de chacun des dispositifs de transport.

3. Dispositif selon la revendication 1 ou la revendication 2, **caractérisé en ce que** l'unité de gestion des positions comporte une unité d'analyse des signaux reçus par les transmetteurs de signaux et représentant l'itinéraire de transport par unité de temps d'un dispositif de transport, l'unité d'analyse convertissant les signaux reçus en valeurs de position pour une marchandise de détail individuelle traversant le dispositif et les enregistre et/ou les actualise dans une mémoire des données de position pendant que la marchandise de détail traverse le dispositif.

4. Dispositif selon la revendication 3, **caractérisé en ce que** l'unité de gestion des positions demande aux unités d'analyse, de façon cyclique à intervalles prédéfinis, des informations sur l'itinéraire de transport des dispositifs de transport.

5. Dispositif selon l'une quelconque des revendications 1 à 4, **caractérisé en ce que** le dispositif comporte un deuxième détecteur de position, lequel est disposé à une distance prédéfinie par rapport au premier détecteur de position le long de la section de transport.

6. Dispositif selon la revendication 5, **caractérisé en ce que** les premiers et deuxièmes détecteurs de position sont affectés à différents dispositifs de transport.

7. Dispositif selon l'une quelconque des revendications précédentes, **caractérisé en ce que** la liaison par bus qui relie le dispositif de commande aux stations de traitement, est une liaison par bus multi-maître.

8. Dispositif selon l'une quelconque des revendications précédentes, **caractérisé en ce que** la liaison par bus reliant le dispositif de commande aux stations de traitement est un bus CAN.

9. Dispositif selon la revendication 8, **caractérisée en ce que** l'unité de gestion des positions a la forme d'un noeud CAN.

10. Dispositif selon l'une quelconque des revendications précédentes, **caractérisé en ce que** le dispositif comporte une station de séparation des marchandises de détail en amont de la section de transport.

11. Dispositif selon l'une quelconque des revendications précédentes, **caractérisé en ce que** l'unité de gestion des positions est modulaire, un module de gestion des positions étant affecté à chaque dispositif de transport et les modules de deux dispositifs de transport qui se succèdent le long de la section de transport communiquant entre eux à l'aide d'une interface de données.

12. Dispositif selon l'une quelconque des revendications 1 à 11, **caractérisé en ce que** le générateur d'évènements est modulaire, un module étant affecté à une station de traitement ou à un type de stations de traitement.

13. Procédé pour le transport et le traitement de marchandises de détail individuelles le long d'une section de transport à l'aide d'un ou plusieurs dispositifs de transport qui se succèdent et d'au moins une station de traitement, dans lequel on utilise un dispositif de commande relié à un premier détecteur de position et à des unités d'entraînement des dispositifs de transport, lequel dispositif de commande comprend une unité de gestion des positions, chaque marchandise de détail individuelle étant suivie, à partir du moment où elle est détectée par le premier détecteur de position, par l'unité de gestion des positions jusqu'à ce qu'elle quitte la section de transport sur son chemin le long de celle-ci, l'unité de gestion des positions recevant, des unités d'entraînement des dispositifs de transport, des données destinées à la détermination de l'itinéraire de transport respectif par unité de temps et celui-ci étant pris en compte conformément à la position respective de la pièce le long de la section de transport lors de l'actualisation des données de position, et le dispositif de commande transmettant, le cas échéant par l'intermédiaire d'un générateur d'évènements, des données de commande à la (aux) station(s) de traitement via une liaison bus.

14. Procédé selon la revendication 13, **caractérisé en ce que** le détecteur de position détecte également l'arête arrière d'un objet marchandise de détail et calcule ainsi l'étendue de l'objet marchandise de détail dans le sens du transport.

15. Procédé selon la revendication 14, **caractérisé en ce que** les données de l'itinéraire de transport d'un premier dispositif de transport sont utilisées pour actualiser les données de position d'un objet marchandise de détail jusqu'à ce que cet objet marchandise de détail soit transféré, pour l'essentiel pour moitié de son étendue dans le sens du transport, à un dispositif de transport suivant, à la suite de quoi ce sont les données d'itinéraire de transport du dispositif de transport suivant qui sont utilisées pour actualiser les données de position de l'objet marchandise de détail.

16. Procédé selon l'une quelconque des revendications 13 à 15, **caractérisé en ce qu'**on utilise un deuxième détecteur de position afin de vérifier, en aval de la section de transport, les données de position d'un objet marchandise de détail et, le cas échéant, de les corriger.

17. Procédé selon l'une quelconque des revendications 13 à 16, **caractérisé en ce que** la liaison par bus est un bus CAN.

18. Procédé selon la revendication 17, **caractérisé en ce que** l'unité de gestion des positions a la forme d'un noeud CAN.
